# EUROPÄISCHE PATENTSCHRIFT

(11) **EP 1 971 019 B1**
(45) Veröffentlichungstag und Bekanntmachung des Hinweises auf die Patenterteilung: **24.04.2013**
(21) Anmeldenummer: 08001035.8
(22) Anmeldetag: 21.01.2008
(51) Int. Cl.: H02M 3/158, H02M 7/5395, H02M 7/5387

(54) **Schaltungsvorrichtung zum transformatorlosen Umwandeln einer Gleichspannung in eine Wechselspannung mittels zweier DC/DC Wandler und einem AC/DC Wandler**
Switching device for transformerless conversion of an electric direct current into an AC voltage with two DC/DC converters and a DC/AC converter
Circuit destiné à la transformation sans transformateur d'une tension continue électrique en une tension alternative avec deux convertisseurs de courant continu et un onduleur

(30) Priorität: 13.03.2007 EP 07005140
(43) Veröffentlichungstag der Anmeldung: 17.09.2008
(73) Patentinhaber: SMA Solar Technology AG, 34266 Niestetal (DE)
(72) Erfinder: Mallwitz, Regine, Dr., 34131 Kassel (DE)
(74) Vertreter: Walther, Walther & Hinz GbR

(56) Entgegenhaltungen:
- DURAN-GOMEZ J L ET AL: "Analysis and Evaluation of a Series-Combined Connected Boost and Buck-Boost DC-DC Converter for Photovoltaic Application", APPLIED POWER ELECTRONICS CONFERENCE AND EXPOSITION, 2006. APEC '06. T WENTY-FIRST ANNUAL IEEE MARCH 19, 2006, PISCATAWAY, NJ, USA,IEEE, PISCATAWAY, NJ, USA, 19. März 2006 (2006-03-19), Seiten 979-985, XP010910063, DOI: 10.1109/APEC.2006.1620657 ISBN: 978-0-7803-9547-3
- KASA N ET AL: "A transformer-less inverter using buck-boost type chopper circuit for photovoltaic power system", POWER ELECTRONICS AND DRIVE SYSTEMS, 1999. PEDS '99. PROCEEDINGS OF TH E IEEE 1999 INTERNATIONAL CONFERENCE ON HONG KONG 27-29 JULY 1999, PISCATAWAY, NJ, USA,IEEE, US, Bd. 2, 27. Juli 1999 (1999-07-27), Seiten 653-658, XP010351975, ISBN: 978-0-7803-5769-3
- "SUNNY BOY 1500", INTERNET CITATION, 27. Januar 2007 (2007-01-27), XP002453580, Gefunden im Internet: URL:http://web.archive.org/web/20070127083 544/http://www.solaranlagen-onl ine.de/texte/beschreibungSB1500-12ED1098.p df [gefunden am 2007-10-03]

## Beschreibung

Die Erfindung betrifft insbesondere eine Schaltungsvorrichtung zum transformatorlosen Umwandeln einer elektrischen Gleichspannung, z. B. aus einem Solargenerator, in eine Wechselspannung zur Einspeisung in ein Energieversorgungsnetz, wobei durch Erdung der Gleichspannungsquelle das Auftreten gefährlicher kapazitiver Ableitströme verhindert wird.

Gleichspannungsquellen, wie Solargeneratoren, Brennstoffzellen, Batterien und dergleichen weisen häufig eine stark variierende Spannung und eine hohe Innenimpedanz auf. Um elektrische Energie aus solchen Quellen in ein Energieversorgungsnetz einzuspeisen, bedarf es einer Anpasseinrichtung. Zum Umwandeln von beispielsweise durch einen Solargenerator zur Verfügung gestellter Gleichspannung in eine Wechselspannung sind Solarwechselrichter bekannt. Es ist bekannt, elektrische Energie mit diesen Wechselrichtern in ein Energieversorgungsnetz, das ein öffentliches Energieversorgungsnetz oder ein Inselnetz für einen oder wenige Verbraucher sein kann, einzuspeisen.

Wird ein hoher Wirkungsgrad erzielt, so wird damit die Wirtschaftlichkeit der Anpasseinrichtung verbessert und die Wärmeverluste der Anlage verringert. Ein hoher Wirkungsgrad ist daher von großer Bedeutung. Dennoch sind auch Sicherheitsaspekte und Kosten zu berücksichtigen, die den Wirkungsgrad beinträchtigen können.

Bekannte Anpasseinrichtungen mit Transformatoren, d.h. mit galvanischer Trennung, haben in der Regel einen schlechteren Wirkungsgrad als solche ohne Transformatoren. Transformatorlose Wechselrichter für die Netzeinspeisung zeichnen sich durch einen sehr hohen Wirkungsgrad und ein geringes Gewicht aus. Dem Solargenerator wird dabei in bekannter Weise ein transformatorloser DC-AC-Wandler nachgeschaltet, der die Gleichspannung der Quelle in eine Wechselspannung umwandelt. Transformatorlose Wechselrichter ohne galvanische Trennung können jedoch für Sicherheitsprobleme auf Grund von Erdungsproblemen verantwortlich sein.

Gleichspannungsquellen, wie beispielsweise ein Solargenerator, weisen eine stark variierende Ausgangsspannung auf, z.B. durch Temperaturänderung auch im Punkt maximaler Leistung (MPP). Durch das Vorschalten eines DC/DC-Wandlers, beispielsweise eines Hoch- oder Tiefsetzstellers, kann in bekannter Weise erreicht werden, dass der nachfolgende DC/AC-Wandler nicht für den schwankenden Eingangsspannungsbereich, sondern für einen festen Arbeitspunkt im DC-Zwischenkreis ausgelegt werden kann. Zudem ist gewährleistet, dass die für den Einspeisebetrieb erforderliche Eingangsspannung am DC/AC-Wandler auch unter ungünstigen Bedingungen bereitgestellt werden kann. Der Scheitelwert der Netzspannung ist in der Regel niedriger als die Spannung im Zwischenkreis, d. h. am Eingang des DC/AC-Wandlers. Sinkt die Spannung am Solargenerator, z.B. witterungsbedingt, bei den nach dem Stand der Technik bekannten Lösungen unter einen bestimmten Wert, wird die Solaranlage vom Netz getrennt, so dass eine Einspeisung nicht mehr erfolgt. Dies senkt die Wirtschaftlichkeit der Anlage.

Ein Wechselrichterkonzept mit einem Tiefsetzsteller ist in der DE 20 2006 001 063 U1 gezeigt und beschrieben. In der DE 20 2006 001 063 U1 wird eine Lösung erläutert, bei der der DC/DC-Wandler einen Tiefsetzsteller umfasst, dem eine Vollbrücke bzw. ein DC/AC-Wandler zur Netzeinspeisung nachgeschaltet ist. Bei dieser Lösung ist der Solargenerator jedoch nicht geerdet. Nachteilig an dieser Schaltung ist, dass sich das Bezugspotential eines nicht geerdeten Solargenerators zur Erde dynamisch mit den Taktimpulsen der Wechselrichter verändert. Die parasitären Kapazitäten zwischen Generator und Erde werden entsprechend der Taktung auf- bzw. entladen. Dabei entstehen Ströme, sogenannte kapazitive Ableitströme, zwischen Solargenerator und Erde. Diese stellen einerseits eine Gefahr für den Menschen bei Berührung des Solargenerators dar, andererseits können Schädigungen am Solargenerator selbst auftreten.

Aus der DE 10 2004 037 446 B4 ist ein transformatorloser Wechselrichter für die Umwandlung von solarem Gleichstrom in sinusförmige Wechselspannung bekannt. Das Auftreten kapazitiver Ableitströme am Solargenerator soll dadurch verhindert werden, dass dem Solargenerator ein symmetrischer Gleichspannungshochsetzsteller nachgeschaltet ist. Durch das Vorhandensein jeweils einer Diode im positiven als auch im negativen Pfad im symmetrischen Gleichspannungshochsetzsteller wird am Solargenerator das Auftreten von Ableitströmen verhindert. Ist der Schalter des Hochsetzstellers geschlossen, sperren die Dioden des Hochsetzstellers. Dadurch wird der Solargenerator von der Wechselspannungsseite entkoppelt. Ein Stromfluss auf der Generatorseite in Form von Ableitströmen soll nach der Beschreibung der Druckschrift nicht auftreten. Der genannte Hochsetzsteller stellt gleichzeitig eine feste Betriebsspannung für den nachfolgenden DC-AC-Wandler bereit. Von Nachteil ist jedoch, dass der Solargenerator keinen definierten Bezug zu einem Erdpotential hat. Eine Erdung des Generators ist nämlich prinzipbedingt nicht möglich. Erst die Erdung ermöglicht es jedoch, auf sichere Weise kapazitive Ableitströme zu verhindern.

In der US 7,064,969 B2 wird ein transformatorloser Wechselrichter für die Umwandlung von solarem Gleichstrom in sinusförmige Wechselspannung vorgeschlagen. Einem geerdeten Solargenerator ist eine Parallelschaltung aus einem ersten Pufferkondensator und einem Inverswandler, einem sogenannten Tief-Hochsetzsteller, nachgeschaltet. Der Solargenerator lädt diesen ersten Pufferkondensator in Abhängigkeit von der zur Verfügung stehenden Solarleistung auf. Ein Tief-Hochsetzsteller lädt einen zweiten Kondensator. Die Kondensatoren sind in Reihe geschaltet und an ihrem Verknüpfungspunkt geerdet. Damit ist auch der Solargenerator geerdet. Den beiden in Reihe geschalteten Kondensatoren folgt eine Brückenschaltung, die über ein aus einer Drossel und einem Kondensator bestehenden Netzfilter eine sinusförmige Wechselspannung für die Einspeisung in ein Energieversorgungsnetz bereitstellt. Bei dieser Lösung kann zwar durch die Erdung des Solargenerators das Auftreten von gefährlichen Ableitströmen verhindert werden, der Tief-Hochsetzsteller ermöglicht hier jedoch keinen festen Betriebspunkt für den DC/AC-Wandler, sondern nur das Aufladen des zweiten Halbbrückenkondensators. Die Spannung am ersten Kondensator entspricht direkt der Ausgangsspannung des Solargenerators, während die Spannung am zweiten Kondensator durch den Tief-Hochsetzsteller einstellbar ist. Damit besteht einerseits eine fixe Kopplung zur Generatorspannung, andererseits eine frei wählbare. Dies ist eine erhebliche Einschränkung der Eingangsspannung des DC-AC-Wandlers, da die Ausgangsspannung in engen Grenzen toleriert ist.

Aus der Veröffentlichung KASA N ET AL: "A transformer-less inverter using buck boost type chopper circuit for photovoltaic power system" POWER ELECTRONICS AND DRIVE SYSTEMS, 1999 PEDS, PROCEEDINGS OF THE IEEE 1999 INTERNATINAL CONFERENCE ON HONG KONG 27 - 29. PISCATAWAY, NNJ, USA, IEEE, US, Bd. 2, 27. Juli 1999, Seiten 653-658, XP 010351975, ISBN:0-7803-5769-8 ist eine Schaltungsvorrichtung zum transformatorlosen Umwandeln einer elektrischen Gleichspannung einer dreipoligen, geerdeten Gleichspannungsquelle bekannt. Zwei Solargeneratoren sind in Reihe geschaltet, so dass der Verknüpfungspunkt beider Generatoren einen ersten Pol bildet, und zwar einen Erdungspol. Der Pluspol des ersten Generators bildet einen zweiten Pol, der dem Pluspol entspricht, und der zweite Generator bildet den dritten Pol, der dem Minuspol entspricht. Parallel zu jedem Generator ist ein Kondensator geschaltet. Parallel zu jedem Kondensator ist jeweils ein Tief-Hochsetzsteller bestehend aus je einem Transistor, einer Spule, und einer Diode geschaltet. Jeder Tief-Hochsetzsteller ist über einen ausgangsseitigen Schalter mit dem gemeinsamen lastseitigen Kondensator verbunden. Dieser lastseitige Kondensator ist parallel zu einer AC-Last, die auch ein AC-Netz sein kann, geschaltet. Pro Halbwelle der AC-Spannung arbeitet nur einer der beiden Tief-Hochsetzsteller und damit auch nur einer der beiden PV-Generatoren.

Die Veröffentlichung DURAN_GOMEZ J L ET AL: "Analysis and Evaluation of a Series-Combined Connected Boost and Buck-Boost DC-DC Converter for Photovoltaic Application" APPLIED POWER ELECTRONICS CONFERENCE AND EXPOSITION, 2006, APEC 06. TWENTY_FIRST ANNUAL IEEE MARCH 19, 2006, PISCATAWAY, NJ, USA, IEEE, 19. März 2006, Seiten 979-985, XP010910063, ISBN:0-7803-9547-6, zeigt eine Schaltungsanordnung zur Umwandlung der Gleichspannung einer zweipoligen geerdeten Gleichspannungsquelle, mit einem Hochsetzsteller und einem invertierenden Tief-Hochsetzsteller, die beide parallel zur DC-Quelle geschaltet sind. Dieser aus einem Hochsetzsteller und einem Tief-Hochsetzsteller bestehende DC/DC-Wandler lädt zwei in Reihe liegende Kondensatoren, deren Verbindungspunkt mit dem Minuspol der DC-Quelle verbunden und geerdet ist. Die Ausgangsspannung des DC/DC-Wandlers ist bezüglich des Erdpotentials (PE) symmetrisch. Dem DC/DC-Wandler folgt ein impulsweitengesteuerter DC/AC-Wandler.

Die technische Beschreibung SUNNY BOY 1500- DER TRAFOLOSE STRING-WECHSELRICHTER FÜR PHOTOVOLTAIKANLAGEN, [Online] 27. Januar 2007, XP002453580, veranschaulicht eine Schaltungsanordnung zur Umwandlung der Gleichspannung einer zweipoligen geerdeten Gleichspannungsquelle mit einem Hochsetzsteller und einem DC/AC-Wandler. Die Anordnung ist transformatorlos. Der Generator ist nicht (PE)-geerdet. Plus- und Minusleitung zum PV-Generator führen während des Einspeisebetriebs eine lebensgefährliche hohe Berührungsspannung gegen das (PE)-Erdpotential.

Der Erfindung liegt die Aufgabe zugrunde, eine Schaltungsvorrichtung zum transformatorlosen Umwandeln einer elektrischen Gleichspannung in eine Wechselspannung zur Netzeinspeisung zu schaffen, bei der sowohl die Gleichspannungsquelle geerdet werden kann, um gefährliche Arbeitsströme zu verhindern, als auch eine Netzeinspeisung unter extrem schlechten Bedingungen, wie z. B. sehr niedrige Generatorspannungen, möglich ist, wobei ein hoher Wirkungsgrad erreicht wird, insbesondere durch einen festen Betriebspunkt des DC-AC-Wandlers.

Diese Aufgabe wird durch eine Schaltungsvorrichtung mit den kennzeichnenden Merkmalen Anspruches 1 in Verbindung mit seinen Oberbegriffsmerkmalen gelöst.

Erfindungsgemäß ist eine DC-DC-Anpasseinrichtung vorgesehen, die dem geerdeten Solargenerator nachgeschaltet ist und an ihrem Ausgang eine auf Erdpotential bezogene symmetrische +/- Spannung bereitstellt, deren Amplitude auf einen konstanten Wert geregelt werden kann. Diese Anpasseinrichtung besteht im Wesentlichen aus zwei hintereinander geschalteten Inverswandlern, auch invertierender Tief-Hochsetzsteller genannt, zur Ladung je eines Kondensators. Diese Kondensatoren sind in Reihe geschaltet und in ihrem Verknüpfungspunkt geerdet. Diese Kondensatoren werden mit gleicher Polarität geladen. Die Höhe der Spannungen an den Kondensatoren ist regelbar.

Diese Kondensatoren können Bestandteil der nachgeschalteten DC-AC-Wandlerschaltung oder des DC-DC-Wandlers sein. Der DC-AC-Wandler wird vorzugsweise durch impulsgesteuerte Spannungsimpulse zur Regelung sinusförmigen Netzstromes zur Einspeisung in ein Energieversorgungsnetz gesteuert.

Der DC-AC-Wandler ist dem DC-DC-Wandler nachgeschaltet. Das bedeutet, dass der vom Generator erzeugte Energiefluss vom DC-DC-Wandler zum DC-AC-Wandler fließt.

Dieser DC-AC-Wandler ist insbesondere mit mehreren Halbleiterschaltern versehen, die entsprechend der Regelung getaktet werden. Dies geschieht vorzugsweise bei einem festen Betriebspunkt. Die Schalter werden insbesondere nur für diesen Betriebspunkt, z. B. eine feste DC-Spannung, ausgelegt. Dadurch können Schalter mit niedriger Sperrspannungsfähigkeit gewählt werden, die in der Regel geringere Schalt- und Durchlassverluste aufweisen. Dies hat einen höheren Wirkungsgrad des DC-AC-Wandlers zur Folge. Vorteilhaft ist, dass die beschriebenen Schalter in der Regel günstiger in der Anschaffung sind.

Der feste Betriebspunkt wird insbesondere so gewählt, dass eine Einspeisung möglich ist. So sollte die Spannung am Eingang des DC-AC-Wandlers mindestens 10% über dem Scheitelwert der Wechselspannung des zu speisenden Netzes liegen.

Ein aus der erfindungsgemäßen Vorrichtung geschaffener Wechselrichter wird vorzugsweise bei Solaranlagen üblich mit Hilfe eines Reglers in Form einer MPPT (Maximum Power Point Tracking) so betrieben, dass der Gleichspannungsgenerator unter allen gegebenen Bedingungen die maximal mögliche Leistung abgibt. Damit ist ein hoher Wirkungsgrad der Gesamtanlage erreichbar.

Der Erfindung liegt außerdem der Gedanke zugrunde, eine DC-DC-Anpasseinrichtung zu nutzen, so dass die Spannungsamplitude am Eingang des DC/AC-Wandlers auf einen konstanten Wert geregelt werden kann.

Die DC/DC-Anpasseinrichtung besteht aus zwei Tief-Hochsetzstellern, die ausgangsseitig je einen Kondensator aufladen. Der erste Tief-Hochsteller, bestehend aus mindestens einem Schalter, einer Diode und einer Drossel, ist dem Gleichspannungs-Generator parallel nachgeschaltet. Der ausgangsseitige erste Kondensator ist dem ersten Tief-Hochsetzsteller parallel nachgeschaltet und wird durch den ersten Tief-Hochsetzsteller geladen.

Der zweite Tief-Hochsetzsteller, bestehend aus mindestens einem Schalter, einer Diode und einer Drossel, ist dem ersten Kondensator parallel nachgeschaltet und lädt einen zweiten Kondensator.

Durch die Erfindung kann ein transformatorloser Wechselrichter bzw. Umrichter mit höchstem Wirkungsgrad zur Netzeinspeisung bereitgestellt werden, der das Auftreten von Ableitströmen an der Gleichspannungsquelle durch Erdung verhindert und dessen DC/AC-Wandler für einen festen DC-Arbeitspunkt bzw. festen DC-Betriebspunkt ausgelegt werden kann.

Der durch die erfindungsgemäße Schaltungsvorrichtung geschaffene Wechselrichter ist zur Umwandlung einer stark variierenden Gleichspannung geeignet, insbesondere aus einem Solargenerator, in eine Wechselspannung zur Einspeisung in ein öffentliches Energieversorgungsnetz. Dem Solargenerator und dem DC/AC-Wandler ist eine DC/DC-Wandlerstufe zwischengeschaltet. Dadurch können Strom und Spannung am Eingang des DC/AC-Wandlers auf feste Werte geregelt werden. Eine Einspeisung in das Netz ist damit auch bei niedrigen Spannungen am Solargenerator möglich, insbesondere auch dann, wenn ein kleiner Scheitelwert der Netzspannung vorhanden ist. Dadurch können Netzspannungsschwankungen ohne Einbuße des Wirkungsgrades kompensiert werden.

Auch andere Schwankungen, wie Spannungsschwankungen auf Grund von Temperaturänderungen an einem Solargenerator können bei hohem Wirkungsgrad und ohne Unterbrechung des Energieflusses berücksichtigt werden.

Der Wechselrichter ist ohne Transformator ausgeführt. Dies hat einen hohen Wirkungsgrad zur Folge. Vorteilhaft ist auch das geringe Gewicht.

Die zweipolige Quelle wird außerdem geerdet. Dadurch werden kapazitive Ableitströme und deren Folgen, wie Gefährdung von Menschen und Beschädigung des Generators vermieden, und zwar wird insbesondere vermieden, dass sich das Bezugspotential des Solargenerator zur Erde dynamisch mit Taktimpulsen der Wechselrichter verändert. Parasitäre Kapazitäten werden entsprechend einer Taktung nicht mehr auf- bzw. entladen, so dass gefährliche kapazitive Ableitströme zwischen Gleichspannungsquelle und Erde vermieden werden.

Im Prinzip sind zwei Anpasseinrichtungen vorgesehen, wobei der Gleichspannungsquelle eine erste Anpasseinrichtung zur Ladung des ersten Kondensators nachgeschaltet ist und parallel zur ersten Anpasseinrichtung eine zweite Anpasseinrichtung zur Ladung des zweiten Kondensators nachgeschaltet ist. Durch individuelle Taktung der Schalter der Inverswandler kann die Spannung der Kondensatoren unabhängig voneinander eingestellt werden. Dadurch ist die Schaffung der bezüglich Erdpotential symmetrischen +/- Spannung in sehr genauer und einfacher Weise möglich. Dadurch ist ein hoher Berührungsschutz und ein hoher Wirkungsgrad möglich. Es kann zudem sowohl die DC Spannung erhöht werden, wenn beispielsweise die Generatorspannung sinkt, und es kann beispielsweise die Generatorspannung gesenkt werden, wenn sich der Arbeitspunkt des Generators in Richtung Leerlaufpunkt bewegt. Dies ist möglich bei einem sehr hohen Wirkungsgrad. Auch Netzspannungsschwankungen können bei hohem Wirkungsgrad kompensiert werden.

Durch den impulsweitengesteuerten Wandler kann es auch möglich sein, eine Regelung der Energieeinspeisung zu bewirken, so dass Spannungsschwankungen des Wechselspannungsnetzes berücksichtigt werden, da der DC-Betriebspunkt des DC/AC-Wandlers fest liegt.

Die genannten Vorteile werden zudem durch eine einfache Schaltung gelöst.

Weitere vorteilhafte Ausgestaltungen der Erfindung sind in den Unteransprüchen gekennzeichnet.

Anhand eines Ausführungsbeispiels wird die Erfindung nachstehend näher erläutert.

Es zeigen:
- Fig. 1: ein Darstellung einer Schaltungsanordnung einer erfindungsgemäßen Schaltungsvorrichtung zur Einspeisung in eine Phase eines Wechselspannungsnetzes und
- Fig. 2: eine Darstellung einer Schaltungsanordnung einer Variante der erfindungsgemäßen Schaltungsvorrichtung zur dreiphasigen Netzeinspeisung.

In den Figuren sind gleiche Teile mit denselben Bezugszeichen versehen.

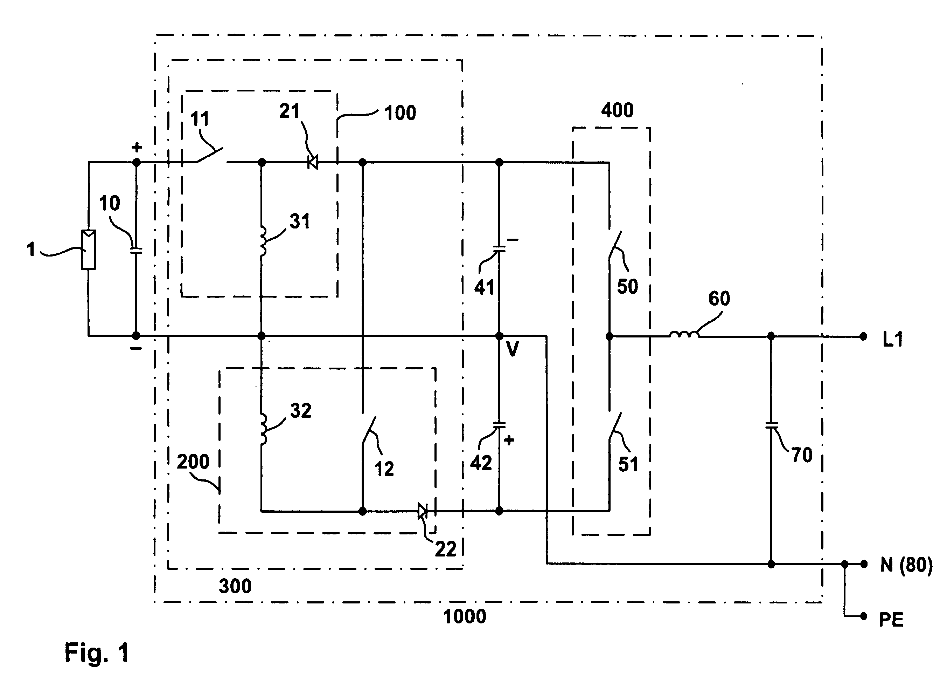

Figur 1 zeigt einen Wechselrichter 1000 für eine Gleichspannungsquelle, insbesondere einen Photovoltaikgenerator 1 mit einem oder mehreren Photovoltaikmodulen, wobei die Module in Reihe geschaltet und/oder parallel geschaltet sein können. Der Wechselrichter 1000 ist in Figur 1 einphasig ausgeführt.

Der Photovoltaikgenerator 1 hat insbesondere nur zwei Anschlüsse, und zwar einen Pluspol (+), der in der Zeichnung oben liegt, und einen Minuspol (-). Der Minuspol (-) ist mit dem Erdungspunkt, d. h. dem Null-Leiter (N) des Wechselspannungsnetzes verbunden. Der Null-Leiter (N) ist mit dem Erdpotential (PE) verbunden.

Parallel zum Photovoltaikgenerator 1 ist ein Pufferkondensator 10 geschaltet. Diesem folgt ein DC/DC-Wandler 300. Dieser DC/DC-Wandler 300 wandelt die Generatorgleichspannung so um, dass an seinem Ausgang eine symmetrische +/- Spannung bezüglich dem Erdungspunkt (80) anliegt.

Dem DC-DC-Wandler 300 sind ein Zwischenkreis, bestehend aus der Reihenschaltung der Kondensatoren 41 und 42 sowie ein DC-AC-Wandler 400 mit einem Netzfilter, bestehend aus einer Drossel 60 und einem Kondensator 70, nachgeschaltet. Diese Anordnung wandelt die Ausgangsspannung des DC-DC-Wandlers 300 in eine zur Netzeinspeisung geeignete Wechselspannung um.

Wie Fig. 1 zeigt, ist dem Solargenerator bzw. dem Photovoltaikgenerator 1 mit dem Pufferkondensator 10 ein invertierender Tief-Hochsetzsteller 100 nachgeschaltet, und zwar bestehend aus einem Schalter 11, einer Diode 21 und einer Induktivität 31. Durch entsprechende Taktung des Schalters 11 kann die Spannung am Kondensator 41 geregelt werden. Die Funktionsweise eines invertierenden Tief-Hochsetzstellers ist bekannt.

Ein zweiter invertierender Tief-Hochsetzsteller 200 besteht, wie in Figur 1 gezeigt ist, aus einem Schalter 12, einer Diode 22 und einer Induktivität 32. Die Anordnung lädt den Kondensator 42. Durch entsprechende Taktung des Schalters 12 kann die Spannung am Kondensator 42 geregelt werden. Der zweite Tief-Hochsetzsteller 200 ist praktisch dem Kondensator 41 nachgeschaltet und invertiert die Spannung des Kondensators 41, die der Eingangsspannung des zweiten Tief-Hochsetzstellers 200 entspricht.

Die Kondensatoren 41 und 42 sind mit gleicher Polung in Reihe geschaltet. Durch die obere Anordnung wird der erste Kondensator 41 durch die untere Anordnung der zweite Kondensator 42 geladen. Durch entsprechende Taktung der Schalter 11 bzw. 12 kann die Spannung am Kondensator 41 bzw. 42 eingestellt werden.

Der Schalter 11 und die Diode 21 des ersten Tief-Hochsetzstellers 100 sind in Reihe geschaltet. Der Schalter 11 ist mit dem Plus-Pol des DC-Generators und mit der Katode der Diode 21 verbunden. Die Anode der Diode 21 ist mit dem Minuspol des Kondensators 41 verbunden. Die Drossel 31 ist mit einem Anschluss mit dem Verbindungspunkt zwischen Schalter 11 und Diode 21 verbunden. Der zweite (andere) Anschluss ist mit dem Minuspol des DC-Generators 1 verbunden.

Zwischen dem Minuspol des DC-Generators 1 und dem Verbindungspunkt zwischen dem Schalter 12 und der Anode der Diode 22 liegt die Drossel 32. Alle drei Bauteile bilden den zweiten Tief-Hochsetzsteller 200. Der zweite Anschluss des Schalters 12 ist mit der Anode von Diode 21 des ersten Tief-Hochsetzstellers verbunden. Die Katode der Diode 22 ist mit dem zweiten Kondensator 42 verschaltet und zwar am Pluspol des Kondensators 42.

Der Pluspol des ersten Kondensators 41 und der Minuspol des zweiten Kondensators 42 sind miteinander sowie mit dem Minuspol des DC-Generators 1 bzw. dem Null-Leiter (N) bzw. dem Erdungspunkt (PE) verbunden.

Durch diese Schaltungstopologie ist der untere Tief-Hochsetzsteller 200 dem oberen Tief-Hochsetzsteller 100 nachgeschaltet.

In Figur 1 ist ein DC-AC-Wandler 400 mit den Schaltern 50, 51 versehen. Durch eine impulsweitengesteuerte Ansteuerung dieser Schalter 50, 51 kann eine Wechselspannung am Ausgang bereitgestellt werden.

Der Wechselspannungsausgang der in Figur 1 gezeigten Halbbrücke ist über einen Filter, bestehend aus der Drossel 60 und dem Kondensator 70, mit dem Wechselspannungsnetz zwischen den Anschlüssen L1 und N verbunden.

Vorzugsweise sind die Schalter 11, 12, 50 und 51 übliche Halbleiterschalter, insbesondere MOSFETs, FETs oder IGBTs mit Inversdiode.

Zur Erhöhung des Wirkungsgrades der DC-DC-Anpasseinrichtung bzw. des DC-DC-Wandlers 300 können den Dioden 21 und 22 verlustarme Halbleiterschalter parallelgeschaltet werden, die in den Leitphasen der Dioden zugeschaltet werden. Der DC-DC-Wandler 300 ermöglicht die Steuerung der Zwischenkreisspannung, d. h. Eingangsspannungen, für den DC-AC-Wandler 400.

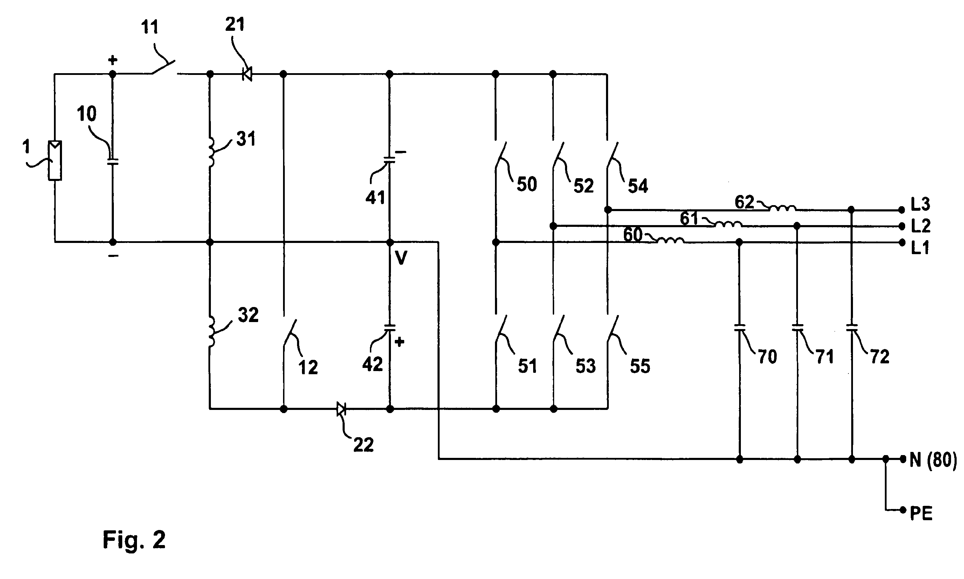

Der DC/AC-Wechselrichter 1000 kann um weitere Brückenzweige, bestehend aus jeweils zwei in Reihe geschaltete Schalter, erweitert werden. Damit ist auch eine mehrphasige Einspeisung möglich. So zeigt Figur 2 eine Anordnung zur Einspeisung in ein dreiphasiges Netz.

Bei den Schaltungen nach Fig. 1 und 2 sind zwei Anpasseinrichtungen 100, 200 vorhanden, wobei die erste Anpasseinrichtung 100 einen ersten Kondensator 41 auflädt und die zweite Anpasseinrichtung 200 einen zweiten Kondensator 42 auflädt. Die Anpasseinrichtungen 100, 200 sind so ausgeführt, dass eine bezüglich dem Erdpotential 80 symmetrische +/Ausgangsspannung an der DC/DC-Wandlerstufe vorhanden ist. Weiterhin ist erfindungsgemäß der Photovoltaikgenerator 1 an einem der Spannungspole, insbesondere dem Minuspol, geerdet.

Als Anpassungseinrichtung dienen die Steller 100, 200, die eine eingangsseitige Gleichspannung ausgangsseitig verändern, so dass der Arbeitspunkt der Gleichspannungsquelle 1 insbesondere des Photovoltaikgenerators 1 veränderbar ist.

Die Erfindung eignet sich für einen transformatorlosen Wechselrichter bzw. Umrichter zur Umwandlung von Gleichspannung aus einer Gleichspannungsquelle, beispielsweise einem Solargenerator, aber auch einer Windenergieanlage mit PM-Generator, einer Brennstoffzelle, einer Batterie oder einer anderen Gleichspannungsquelle in eine Wechselspannung zur Einspeisung in ein Energieversorgungsnetz, beispielsweise das öffentliche Energieversorgungsnetz oder ein Inselnetz.

Durch die Erdung der zweipoligen Gleichspannungsquelle wird das Auftreten kapazitiver Ableitströme verhindert.

### Bezugszeichenliste

- 1: Solargenerator

- 10: Pufferkondensator
- 11,12: Schalter

- 21,22: Diode

- 31,32: Induktivität

- 41,42: Kondensator

- 50, 51: Schalter

- 60,61,62: Filterdrossel

- 70,71,72: Filterkondensator

- 100, 200: Tief-Hochsetzsteller

- 300: DC/DC-Wandler
- 400: DC/AC-Wandler

- 1000: Wechselrichter

## Patentansprüche

1. Schaltungsvorrichtung zum transformatorlosen Umwandeln einer elektrischen Gleichspannung einer zweipoligen, geerdeten Gleichspannungsquelle (1) mit einem ersten Spannungspol (+) und einem zweiten Spannungspol (-) in eine Wechselspannung zur Einspeisung in ein Wechselspannungsnetz, wobei einem DC/DC-Wandler (300) ein DC/AC-Wandler (400) zur Einspeisung in das Wechselspannungsnetz nachgeschaltet ist, sowie zwei Kondensatoren (41, 42) in einem Zwischenkreis zwischen dem DC/DC-Wandler (300) und dem DC/AC-Wandler (400) vorhanden sind, die in Reihe geschaltet sind und einen auf Erdungspotential liegenden Verknüpfungspunkt (V) aufweisen, so dass eine bezüglich dem Erdungspotential (80) symmetrische +/- Spannung ausgangsseitig der DC/DC-Wandlerstufe (300) anliegt,
**dadurch gekennzeichnet,**
**dass** vorhanden ist:
- ein erster invertierender Tief-Hochsetzsteller (100), der der Gleichspannungsquelle (1) parallel nachgeschaltet ist und so angeschlossen ist, dass er den ersten Kondensator (41) lädt,
- und ein zweiter invertierender Tief-Hochsetzsteller (200), der dem ersten invertierenden Tief-Hochsetzsteller (100) parallel nachgeschaltet und so angeschlossen ist, dass er den zweiten Kondensator (42) lädt, wobei beide invertierenden Tief-Hochsetzsteller (100, 200) den DC-DC-Wandler (300) bilden,
- wobei der erste invertierende Tief-Hochsetzsteller (100) besteht aus mindestens einem ersten Schalter (11), mindestens einer ersten Diode (21) und mindestens einer ersten Drossel (31),
- wobei der zweite invertierende Tief-Hochsetzsteller (200) besteht aus mindestens einem zweiten Schalter (12), mindestens einer zweiten Diode (22) und mindestens einer zweiten Drossel (32).

2. Schaltungsvorrichtung nach Anspruch 1, **dadurch gekennzeichnet,**
- **dass** jeder invertierende Tief-Hochsetzsteller (100, 200) derart ausgeführt ist, dass ein fester DC-Betriebspunkt für den DC-AC-Wandler (400) vorhanden ist,
- und die Gleichspannungsquelle (1) an einem der Spannungspole (-) geerdet ist.

3. Schaltungsvorrichtung nach Anspruch 2,
**dadurch gekennzeichnet,**
**dass** am einen Eingang des DC/AC-Wandlers (400) eine geregelte +/- DC-Spannung und/oder ein geregelter konstanter +/- Strom vorliegt.

4. Schaltungseinrichtung nach Anspruch 2 oder 3,
**dadurch gekennzeichnet,**
**dass** ein DC-Betriebspunkt mindestens 10 % höher liegt als ein maximaler Momentanwert der Netzspannung eines angeschlossenen Netzes.

5. Schaltungsvorrichtung nach einem der vorhergehenden Ansprüche,
**dadurch gekennzeichnet,**
**dass** der DC-AC-Wandler (400) impulsweitengesteuert zur Regelung eines sinusförmigen Stromverlaufs und zur Regelung einer Einspeisungsgröße für ein Energieversorgungsnetz ausgeführt ist.

6. Schaltungseinrichtung nach einem der vorhergehenden Ansprüche,
**dadurch gekennzeichnet,**
**dass** der DC/AC-Wandler (400) ein- oder mehrphasig ausgeführt ist.

7. Schaltungseinrichtung nach einem der vorhergehenden Ansprüche,
**gekennzeichnet durch**
eine Ausführung für einen Photovoltaikgenerator (1) als Gleichspannungsquelle.

8. Verfahren zum Ableiten kapazitiver Ableitströme und Schutz vor Gefährdung von Personen und vor Beschädigungen eines Solargenerators mit einer Schaltungsvorrichtung nach einem der vorhergehenden Ansprüche

## Claims

1. A circuit device for transformer-less conversion of an electrical direct current voltage of a two-pole, grounded DC voltage source (1) with a first voltage pole (+) and a second voltage pole (-) into an alternating current voltage for feed-in into an AC voltage grid, wherein a DC/AC converter (400) is connected downstream of a DC/DC converter (300) for feed-in into the AC voltage grid, and two capacitors (41, 42) are provided in an intermediate circuit between the DC/DC converter (300) and the DC/AC converter (400), which are series-connected and have a connection point (V) at the grounding potential, so that on the output side of the DC/DC converter level (300) there is a +/voltage that is symmetrical relative to the grounding potential (80),
**characterized in that**
there is:
- a first inverting buck-boost converter (100) that is connected in parallel downstream of the DC voltage source (1) and is connected in such a manner that it charges the first capacitor (41),
- and a second inverting buck-boost converter (200) that is connected in parallel downstream of the first inverting buck-boost converter (100) and is connected in such a manner that it charges the second capacitor (42), wherein both inverting buck-boost converters (100, 200) form the DC-DC converter (300),
- wherein the first inverting buck-boost converter (100) consists of at least one switch (11), at least one first diode (21) and at least one first choke (31),
- wherein the second inverting buck-boost converter (200) consists of at least one second switch (12), at least one second diode (22) and at least one second choke (32).

2. The circuit device according to claim 1, **characterized in that**
- each inverting buck-boost converter (100, 200) is configured in such a manner that there is a fixed DC operating point for the DC-AC converter (400),
- and the DC voltage source (1) is grounded at one of the voltage poles (-).

3. The circuit device according to claim 2,
**characterized in that**
there is a regulated constant +/- current and/or a regulated +/- DC voltage at one of the inputs of the DC/AC converter (400).

4. The circuit device according to claim 2 or 3,
**characterized in that**
a DC operating point is at least 10% higher than a maximum instantaneous value of the grid voltage of a connected grid.

5. The circuit device according to one of the afore-mentioned claims,
**characterized in that** the DC-AC converter (400) is configured to be pulse amplitude controlled for regulating a sinusoidal current profile and for regulating a feed-in value for a power grid.

6. The circuit device according to one of the afore-mentioned claims,
**characterized in that**
the DC/AC converter (400) is configured to be one-phase or multiphase.

7. The circuit device according to one of the afore-mentioned claims,
**characterized by**
a configuration for a photovoltaic generator (1) as a DC voltage source.

8. A method for diverting capacitive leakage currents and for protection against endangerment of persons and damages to a solar generator with a circuit device according to one of the afore-mentioned claims.

## Revendications

1. Installation de commande pour la transformation sans transformateur d'une tension électrique continue d'une source bipolaire de courant continu (1) mise à la terre, ayant un premier pôle d'alimentation (+) et un deuxième pôle d'alimentation (-), en une tension alternative pour l'introduction dans un réseau de tension alternative, dans lequel on utilise un transformateur DC/DC (300), un transformateur DC/AC (400) pour l'introduction du courant alternatif dans le réseau, ainsi que deux condensateurs (41, 42) placés dans un circuit intermédiaire entre le transformateur DC/DC (300) et le transformateur DC/AC (400), couplés en série et raccordés en un point de connexion mis au potentiel de la terre (V), de telle manière qu'une tension symétrique +/-DC par rapport au potentiel (80) de la terre soit obtenue du coté de la sortie de la phase de transformation DC/DC,
**caractérisée en ce que,**
- le premier convertisseur abaisseur-élévateur (100) qui est connecté en parallèle à la source de tension continue (1) est connecté de telle manière que le premier condensateur (41) soit en charge,
- et le second convertisseur abaisseur-élévateur (200) qui est connecté en parallèle au premier convertisseur abaisseur-élévateur (100) de telle manière qu'il charge le second condensateur (42), les deux convertisseurs abaisseurs-élévateurs (100, 200) constituant ledit transformateur DC/DC (300),
- dans lequel le premier convertisseur abaisseur-élévateur (100) se compose d'au moins un premier connecteur (11), d'au moins une première diode (21) et d'au moins un premier étrangleur (31),
- dans lequel le second convertisseur abaisseur-élévateur (200) se compose d'au moins un second connecteur (12), d'au moins une seconde diode (22) et d'au moins un second étrangleur (32).

2. Installation de commande selon la revendication 1, **caractérisée en ce que**
- chaque convertisseur abaisseur-élévateur (100, 200) est réalisé de telle manière qu'un point de raccordement DC fixe soit disponible pour le transformateur DC/AC (400),
- et que la source de tension continue (1) soit mise à la terre à l'un des pôles de tension (-).

3. Installation de commande selon la revendication 2,
**caractérisée en ce que,**
l'une des entrées du transformateur DC/AC (400) est alimentée en tension régulée +/- DC et/ou en courant continu régulé constant +/-.

4. Installation de commande selon les revendications 2 ou 3,
**caractérisée en ce que,**
un point d'alimentation DC est au moins10% plus élevé en tension que la valeur instantanée maximale de la tension du réseau d'un réseau connecté (80).

5. Installation de commande selon l'une quelconque des revendications précédentes,
**caractérisée en ce que,**
le transformateur DC/AC (400) est piloté en amplitudes d'impulsions pour la régulation d'un courant de forme sinusoïdale et pour la régulation d'une unité d'accumulation pour un réseau d'alimentation en énergie (60).

6. Installation de commande selon l'une quelconque des revendications précédentes,
**caractérisée en ce que,**
le transformateur DC/AC (400) est monophasé ou multiphasé.

7. Installation de commande selon l'une quelconque des revendications précédentes,
**caractérisée par,**
une réalisation en tant que générateur photovoltaïque (1) comme source de tension continue.

8. Procédé pour dévier des courants de fuite capacitifs et pour protéger des personnes en danger et un générateur de captage d'énergie solaire de dommages au moyen d'une installation de commande selon l'une quelconque des revendications précédentes.
